# EUROPEAN PATENT APPLICATION

(11) **EP 4 625 565 A1**
(43) Date of publication of application: **01.10.2025**
(21) Application number: 24875777.5
(22) Date of filing: 11.06.2024
(51) Int. Cl.: H01M 10/04, B65G 37/00

(54) **MODULE PRESSURIZATION AND DWELLING LINE BODY AND DISPATCHING METHOD THEREFOR**

(30) Priority: 18.02.2024 CN 202410179351
(71) Applicant: Contemporary Amperex Technology Co., Limited, Jiaocheng District Ningde Fujian 352100 (CN)
(72) Inventor: WANG, Jifeng, Ningde, Fujian 352100 (CN); DUAN, Minmin, Ningde, Fujian 352100 (CN); LI, Jinyuan, Ningde, Fujian 352100 (CN)
(74) Representative: Ziebig Hengelhaupt Intellectual Property Attorneys Patentanwaltskanzlei PartGmbB
(86) International application number: PCT/CN2024/098481
(87) International publication number: WO 2025/171700

(57) **Abstract**

Disclosed are a module pressurization and resting line and a scheduling method therefor. The module pressurization and resting line includes a plurality of pressurization lines, a resting line, and a resting transfer device, and each pressurization line is provided with a pressurization output end; the resting line is provided with a resting input end; the resting transfer device includes a first transfer turntable and a second transfer turntable, where the first transfer turntable is disposed between one of the pressurization output ends and the resting input end, and the first transfer turntable, along its rotational circumferential direction, is capable of being in transfer communication with the resting input end; the second transfer turntable is disposed between the other pressurization output ends and the first transfer turntable, and the first transfer turntable and the second transfer turntable, along their respective rotational circumferential directions, are each provided with a first position and a second position; at the first position, the first transfer turntable and the second transfer turntable are each capable of being in transfer communication with the corresponding pressurization output ends, and at the second position, the first transfer turntable and the second transfer turntable are capable of being in transfer communication with each other. Therefore, the issue of the large space requirement associated with existing power battery production lines is addressed.

## Description

The present application claims priority to Chinese Patent Application No. 202410179351.7 filed with China National Intellectual Property Administration on February 18, 2024, and entitled "MODULE PRESSURIZATION AND RESTING LINE AND SCHEDULING METHOD THEREFOR", the content of which is incorporated herein by reference in its entirety.

### TECHNICAL FIELD

The present application relates to the technical field of pressurization and resting of battery modules, and in particular, to a module pressurization and resting line and a scheduling method therefor.

### BACKGROUND

Power batteries are not only applied in energy storage power systems such as hydropower, thermal power, wind power and solar power stations, but are also widely applied in electric transportation vehicles such as electric bicycles, electric motorcycles, electric cars, as well as in aerospace, and other fields. With the continuous expansion of the application field of power batteries, the market demand for power batteries is also steadily increasing. As a result, factories often need to add parallel battery pack production lines to boost production capacity of power batteries. However, the addition of parallel production lines also poses challenges in terms of increased demand for plant floor space.

### TECHNICAL SOLUTION

The primary objective of the present application is to provide a module pressurization and resting line and a scheduling method therefor, aiming to address the issue of the large space requirement associated with existing power battery production lines.

In a first aspect, the present application provides a module pressurization and resting line, including a plurality of pressurization stations, the module pressurization and resting line being configured to transport battery modules with heat dissipation plates bonded at bottoms thereof to the pressurization stations for pressurization and then resting. The module pressurization and resting line includes:
a plurality of pressurization lines, each passing through the plurality of pressurization stations to transport battery modules to corresponding pressurization stations, each of the pressurization lines being provided with a pressurization output end;
a resting line, having a resting input end, the resting line being configured to allow pressurized battery modules to rest; and
a resting transfer device, including a first transfer turntable and a second transfer turntable, where the first transfer turntable is disposed between the pressurization output end of one of the pressurization lines and the resting input end of the resting line, the first transfer turntable, along its rotational circumferential direction, is capable of being in transfer communication with the resting input end; the second transfer turntable is disposed between the pressurization output ends of the other pressurization lines and the first transfer turntable, where the first transfer turntable and the second transfer turntable, along their respective rotational circumferential directions, are each provided with a first position and a second position, at the first position, the first transfer turntable and the second transfer turntable are each capable of being in transfer communication with the corresponding pressurization output ends, and at the second position, the first transfer turntable and the second transfer turntable are capable of being in transfer communication with each other.

In the technical solutions of the embodiments of the present application, a plurality of pressurization lines are capable of transporting battery modules with heat dissipation plates bonded at their bottoms to a plurality of pressurization stations, thereby ensuring the processing efficiency of the battery modules. After performing pressurization and pressure-holding on the battery modules and the heat dissipation plates at the pressurization stations, if the pressurization line at which the pressurization station is positioned corresponds to the first transfer turntable, the first transfer turntable can be directly controlled to first rotate to receive the battery modules and then rotate to establish transfer communication with the resting line, thereby transferring the battery modules to the resting line. If the pressurization line at which the pressurization station is positioned corresponds to the second transfer turntable, the corresponding second transfer turntable can first be controlled to rotate to receive the corresponding battery modules. Subsequently, both the first transfer turntable and the second transfer turntable are controlled to rotate to the second position, thereby transferring the corresponding battery modules to the first transfer turntable. Finally, the first transfer turntable is controlled to rotate to establish transfer communication with the resting line. With this arrangement, the battery modules that have been pressurized on the plurality of pressurization lines can be sequentially transferred to the resting line through the coordinated transfer action of the first transfer turntable and the second transfer turntable, free from separately disposing an individual resting line for each pressurization line. As a result, the single resting line is fully utilized, thereby reducing the space required for the module pressurization and resting line, which in turn reduces the space required for the battery pack production line. Moreover, the resting transfer device features a relatively orderly structural arrangement and a relatively simple structure, occupying less space.

In some embodiments, at the first position, the first transfer turntable is in transfer communication with the resting input end.

According to the above technical solution, by configuring the first transfer turntable to be further in transfer communication with the resting input end at the first position, the battery module received from the pressurization line can be directly transferred to the resting line. The configuration eliminates the process for the first transfer turntable to rotate for alignment with the resting line, thereby improving the transfer efficiency.

In some embodiments, the module pressurization and resting line further includes an output line, where the output line includes an output loading end;
the resting line is further provided with a resting output end;
the second transfer turntable is disposed between the resting output end and the output loading end, and the second transfer turntable, along its rotational circumferential direction, is capable of being in transfer communication with the resting output end and the output loading end.

According to the above technical solution, by utilizing one of the second transfer turntables as the output turntable of the resting line, the battery modules that have completed the resting process can be transferred to the output line. In one aspect, the utilization efficiency of the second transfer turntable is improved, and in another aspect, the space occupied by the module pressurization and resting line is reduced, and the assembly cost is also reduced.

In some embodiments, at the first position, the second transfer turntable is further in transfer communication with the resting input end; and/or at the second position, the second transfer turntable is further in transfer communication with the output loading end.

According to the above technical solution, regardless of whether the second transfer turntable is configured to be in transfer communication with the resting line at the first position, or to be in transfer communication with the output line at the second position, the number of working position states of the second transfer turntable can be reduced. This facilitates the control of the second transfer turntable, ensuring the positioning accuracy of the second transfer turntable.

In some embodiments, the resting line includes:
two first resting segments arranged in parallel, where the resting input end and the resting output end are each formed at one end of each of the two first resting segments, and the other end of each of the two first resting segments is configured as a transition end;
two transition turntables, arranged corresponding to the two transition ends, respectively; and
a second resting segment, disposed between the two transition turntables,
where, during rotational travel of the transition turntables, the second resting segment is capable of being in transfer communication with the corresponding transition ends.

According to the above technical solution, by arranging the two first resting segments of the resting line in parallel, a rotating transfer path can be formed, thereby significantly reducing the space occupied by the resting line. Moreover, the second resting segment, in combination with the two transition turntables, can ensure the efficient transfer of battery modules on the two first resting segments.

In some embodiments, the module pressurization and resting line further includes a defective transfer line, and the defective transfer line is provided with a defective receiving end. One of the transition turntables, along its rotational circumferential direction, is further capable of being in transfer communication with the defective receiving end.

According to the above technical solution, the corresponding transition turntable can screen out defective battery modules from the resting line, thus directing them to the defective transfer line. This prevents defective battery modules from mixing with qualified battery modules, thereby avoiding negative impact on production.

In some embodiments, the pressurization line is provided with a pressurization input end;
the module pressurization and resting line further includes:
an input line, having an input offloading end, the input line being configured to transport battery modules with heat dissipation plates bonded at bottoms thereof; and
a pressurization transfer device, including at least one pressurization transfer turntable, where the at least one pressurization transfer turntable is capable of selectively establishing transfer communication between one of a plurality of pressurization input ends and the input offloading end.

According to the above technical solution, by using a single input line to sequentially transfer battery modules to a plurality of pressurization lines through the pressurization transfer turntable, the input line is fully utilized. This ensures the loading efficiency of the battery modules, and also reduces the space required for the module pressurization and resting line, thereby reducing the space required for the battery pack production line.

In some embodiments, the pressurization transfer device includes a plurality of pressurization transfer turntables, and the plurality of pressurization transfer turntables includes:
a third transfer turntable, disposed between the pressurization input end of one of the pressurization lines and the input offloading end of the input line, where the third transfer turntable, along its rotational circumferential direction, is capable of being in transfer communication with the input offloading end; and
a fourth transfer turntable, disposed between the pressurization input ends of the other pressurization lines and the third transfer turntable,
where the third transfer turntable and the fourth transfer turntable, along their respective rotational circumferential directions, are each provided with a third position and a fourth position, at the third position, the third transfer turntable and the fourth transfer turntable are each capable of being in transfer communication with the corresponding pressurization input ends, and at the fourth position, the third transfer turntable and the fourth transfer turntable are capable of being in transfer communication with each other.

According to the above technical solution, after the third transfer turntable is controlled to rotate to establish transfer communication with the input offloading end of the input line and receive the battery module, if the pressurization line corresponding to the third transfer turntable is in an idle state, the third transfer turntable can be directly controlled to rotate and transport the battery module to the corresponding pressurization line; if the pressurization line corresponding to the fourth transfer turntable is in an idle state, the third transfer turntable and the fourth transfer turntable can be controlled to rotate to the fourth position, thereby transferring the battery module to the corresponding fourth transfer turntable under the transport action of the turntables. Subsequently, the corresponding fourth transfer turntable is controlled to rotate to establish transfer communication with the pressurization line, thereby achieving the routing of battery modules from the input line to different pressurization lines. This pressurization transfer device features a relatively orderly structural arrangement and a relatively simple structure, occupying less space.

In some embodiments, at the third position, the third transfer turntable is in transfer communication with the input offloading end.

According to the above technical solution, by configuring the third transfer turntable to be further in transfer communication with the input line at the third position, if the pressurization line corresponding to the third transfer turntable is in an idle state, the battery module received from the input line can be directly transferred to the pressurization line through the third transfer turntable. This eliminates the process for the third transfer turntable to rotate for alignment with the pressurization line, thereby improving the transfer efficiency.

In some embodiments, the input line is further configured to transport a vacant tray;
the module pressurization and resting line further includes a tray transfer line, and the tray transfer line is provided with a tray receiving end for transferring the vacant tray;
the third transfer turntable, along its rotational circumferential direction, is capable of being in transfer communication with the tray receiving end.

According to the above technical solution, the third transfer turntable is also capable of rotating to establish transfer communication with the tray receiving end. Therefore, when a vacant tray is transported from the input line, the third transfer turntable can promptly transfer the vacant tray to the tray transfer line, thereby preventing vacant trays from entering the pressurization stations and occupying the pressurization lines, which improves the processing efficiency of the module pressurization and resting line.

In a second aspect, the present application further provides a scheduling method for a module pressurization and resting line. The module pressurization and resting line includes the module pressurization and resting line according to any one of the aspects described above.

The scheduling method includes:
a discharging step: when a pressurized battery module is present on one of the pressurization lines, controlling the corresponding first transfer turntable or the second transfer turntable to rotate to the first position to establish transfer communication with the pressurization output end of the pressurization line and receive the battery module;
a transferring step, including:
   when the first transfer turntable receives the battery module, controlling the first transfer turntable to rotate to establish transfer communication with the resting input end of the resting line;
   when the second transfer turntable receives the battery module, controlling the first transfer turntable and the second transfer turntable to rotate to the second position to transfer the battery module from the second transfer turntable to the first transfer turntable, and controlling the first transfer turntable to rotate to establish transfer communication with the resting input end of the resting line; and
   a loading step: controlling the first transfer turntable to transport the battery module to the resting input end.

In the technical solutions of the embodiments of the present application, in the transferring step, the first transfer turntable functions to transfer battery modules to the resting line. When a pressurized battery module is present on one of the pressurization lines, if the pressurization line corresponds to the first transfer turntable, the first transfer turntable can be correspondingly controlled to rotate to the first position, thereby establishing transfer communication with the pressurization line. Since the first transfer turntable also corresponds to the resting line, the battery module can be directly transferred to the resting line through the first transfer turntable. If the pressurization line corresponds to the second transfer turntable, the second transfer turntable can be correspondingly controlled to rotate to the first position, thereby establishing transfer communication with the pressurization line to receive the battery module. Subsequently, the first transfer turntable and the second transfer turntable are required to be controlled to rotate to the second position, thereby transferring the battery module on the second transfer turntable to the first transfer turntable. The battery module is then further transferred to the resting line through the first transfer turntable, thereby completing the sequential transfer of battery modules from a plurality of pressurization lines to the resting line. Since the resting line has a powered conveying function, the resting line can further transport the received battery modules, ensuring that the resting input end of the resting line is in an unoccupied position. This allows the resting input end to receive the next battery module at any time, thereby preventing battery modules from accumulating at the resting input end and ensuring efficient routing of the battery modules. Moreover, by allowing a plurality of pressurization lines to share a single resting line, the space required for the module pressurization and resting line is reduced.

In some embodiments, the second transfer turntable further corresponds to the resting output end of the resting line;
the module pressurization and resting line further includes an output line;
after the loading step, the method further includes:
   an offloading step:
   when a battery module is present at the resting output end of the resting line, controlling the second transfer turntable to rotate to establish transfer communication with the resting output end to receive the battery module;
   after receiving the battery module, controlling the second transfer turntable to rotate to establish transfer communication with the output loading end of the output line to transfer the battery module to the output line.

According to the above technical solution, an offloading step is further provided. The second transfer turntable is disposed between the resting output end and the output line, enabling the second transfer turntable to receive battery modules from the resting output end and transfer the battery modules to the output line, thereby completing the offloading operation of the battery modules. This method makes full use of the second transfer turntable, enabling the second transfer turntable not only to transfer battery modules to the first transfer turntable but also to transfer battery modules to the output line.

In some embodiments, the module pressurization and resting line further includes an input line and at least one pressurization transfer turntable;
prior to the discharging step, the scheduling method further includes:
a receiving step: when a battery module is present at the input offloading end of the input line, controlling the pressurization transfer turntable to rotate to establish transfer communication with the input offloading end to receive the battery module; and
a feeding step: when one of the pressurization lines is in an idle state, controlling the pressurization transfer turntable to rotate to establish transfer communication with the pressurization input end of the pressurization line to transport the battery module to the pressurization line.

According to the above technical solution, when one of the pressurization lines is in an idle state, the pressurization line can be identified, and the pressurization transfer turntable can rotate to the position corresponding to the pressurization line, thereby transferring the battery module received from the input line to the pressurization line. The "transport of the battery module by the input line to the input offloading end" and the "idle state of one of the pressurization lines" are synchronized within a corresponding production takt time. With the continuous supply of battery modules on the input line, the pressurization transfer turntable can continuously transfer battery modules to a plurality of pressurization lines. Meanwhile, the pressurization lines can continuously pressurize the battery modules sequentially, preventing battery modules from accumulating at the input offloading end and ensuring efficient routing of the battery modules. Moreover, by allowing a plurality of pressurization lines to share a single input line, the space required for the module pressurization and resting line is reduced.

In some embodiments, the plurality of pressurization lines are arranged in parallel, and each of the pressurization input ends of the pressurization lines is provided with the pressurization transfer turntable, the plurality of pressurization transfer turntables include a third transfer turntable and a fourth transfer turntable, the third transfer turntable and the fourth transfer turntable are each provided with a third position for establishing transfer communication with the plurality of pressurization input ends and a fourth position for establishing transfer communication between the third transfer turntable and the fourth transfer turntable, and the third transfer turntable further corresponds to the input offloading end of the input line.

The receiving step includes:
when a battery module is present at the input offloading end of the input line, controlling the third transfer turntable to rotate to establish transfer communication with the input offloading end to receive the battery module;
The feeding step includes:
   when one of the pressurization lines is in an idle state and the pressurization input end of the pressurization line corresponds to the third transfer turntable, controlling the third transfer turntable to rotate to the third position to transport the battery module to the pressurization input end;
   when one of the pressurization lines is in an idle state and the pressurization input end of the pressurization line corresponds to the fourth transfer turntable, controlling the fourth transfer turntable and the third transfer turntable to rotate to the fourth position to transfer the battery module to the fourth transfer turntable, and controlling the fourth transfer turntable to rotate to the third position to transport the battery module to the pressurization line.

According to the above technical solution, in the feeding step, the third transfer turntable functions to receive battery modules from the input line. After receiving the battery modules, when one of the pressurization lines is in an idle state, and if the pressurization line corresponds to the third transfer turntable, the third transfer turntable can directly rotate to the third position to establish transfer communication with the pressurization line; if the pressurization line corresponds to the fourth transfer turntable, the third transfer turntable and the fourth transfer turntable can rotate to the fourth position to establish transfer communication with each other, thereby enabling the battery modules to be transferred from the third transfer turntable to the fourth transfer turntable. Subsequently, the fourth transfer turntable can rotate to the third position to establish transfer communication with the pressurization line. By configuring one of the pressurization transfer turntables as the third transfer turntable, the turntable is fully utilized. Additionally, by rotating a plurality of pressurization transfer turntables to the fourth position for mutual communication, the battery modules can be transferred to the corresponding lines. The resting transfer device features a relatively regular configuration and a relatively simple structure, occupying less space.

In some embodiments, the input line is further configured to transport a vacant tray, and the module pressurization and resting line further includes a tray transfer line.

The scheduling method further includes:
a tray transfer step:
when the input line transports vacant trays, controlling the pressurization transfer turntable to rotate to establish transfer communication with the input offloading end of the input line to receive the vacant trays;
controlling the pressurization transfer turntable to rotate to establish transfer communication with a tray receiving end of the tray transfer line and transport the vacant trays to the tray transfer line.

According to the above technical solution, the scheduling method further includes a tray transfer step. The pressurization transfer turntable is disposed between the input line and the tray transfer line, which enables the pressurization transfer turntable to receive vacant trays and transfer them to the tray transfer line, thereby achieving the offloading of vacant trays. This prevents vacant trays from occupying the pressurization line, thereby improving the processing efficiency of the module pressurization and resting line.

The above description is only an overview of the technical solution of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions in the embodiments of the present application or in the prior art, the drawings required for illustrating the embodiments or description of the prior art are briefly described below. Apparently, the drawings in the following description illustrate merely some embodiments of the present application, and those of ordinary skills in the art may still derive other drawings from the structured illustrated in these drawings without creative efforts.
FIG. 1 is a schematic plan layout diagram of an embodiment of a module pressurization and resting line according to the present application;
FIG. 2 is a diagram of a scheduling route of a module pressurization and resting line according to the present application;
FIG. 3 is a diagram of another scheduling route of a module pressurization and resting line according to the present application; and
FIG. 4 is a schematic flow chart of a first embodiment of the scheduling method according to the present application.

### Description of reference numerals:

| Reference numerals | Name | Reference numerals | Name |
|---|---|---|---|
| 100 | Module pressurization and resting line | 32 | Second transfer turntable |
| 1 | Pressurization line | 4 | Pressurization transfer device |
| 11 | Pressurization station | 4a | Pressurization transfer turntable |
| 12 | Pressurization input end | 41 | Third transfer turntable |
| 13 | Pressurization output end | 42 | Fourth transfer turntable |
| 2 | Resting line | 5 | Input line |
| 21 | Resting input end | 51 | Input offloading end |
| 22 | Resting output end | 6 | Output line |
| 23 | First resting segment | 61 | Output loading end |
| 24 | Second resting segment | 7 | Tray transfer line |
| 25 | Transition turntable | 71 | Tray receiving end |
| 3 | Resting transfer device | 8 | Defective transfer line |
| 31 | First transfer turntable | 81 | Defective receiving end |

The realization of the objective, the functional features, and the advantages of the present application will be further described with reference to the drawings.

### EMBODIMENTS OF THE PRESENT APPLICATION

Embodiments of the technical solutions of the present application will be described in detail below with reference to the drawings. The following embodiments are only for illustrating the technical solutions of the present application more clearly, and therefore are only exemplary and do not limit the protection scope of the present application.

Unless otherwise defined, all technical and scientific terms used herein have the same meaning as commonly understood by those skilled in the technical field to which the present application belongs. The terms used herein are only for illustrating the specific embodiments, rather than limiting the present application. The terms "include", "comprise" and "provided with", and any variations thereof in the specification and claims of the present application and the above-mentioned drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the indicated technical features. In the description of the embodiments of the present application, unless otherwise specifically defined, "a plurality of" means two or more than two.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "a plurality of" refers to more than two (including two). Similarly, "multiple groups" refers to more than two groups (including two groups), and "multiple pieces" refers to more than two pieces (including two pieces).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicating directional or positional relationships are based on the directional or positional relationships shown in the drawings. They are merely for the convenience of describing the embodiments of the present application and simplifying the description, and are not intended to indicate or imply that the devices or elements referred to must have specific directions, be constructed and operated in specific directions. Therefore, these terms should not be construed as limitations on the embodiments of the present application.

In the description of the embodiments of the present application, unless otherwise clearly specified and defined, the technical terms "install", "interconnect", "connect", "fix", and the like should be interpreted in their broad senses. For example, "connect" may be "fixedly connect", "detachably connect", or "integrally connect"; "mechanically connect" or "electrically connect"; or "directly interconnect", "indirectly interconnect through an intermediate", "communication between interiors of two elements", or "interaction between two elements". For those of ordinary skill in the art, the specific meanings of the above terms in the embodiments of the present application can be interpreted according to the specific condition.

Power batteries are not only applied in energy storage power systems such as hydropower, thermal power, wind power and solar power stations, but are also widely applied in electric transportation vehicles such as electric bicycles, electric motorcycles, electric cars, as well as in aerospace, and other fields. With the continuous expansion of the application field of power batteries, the market demand for power batteries is also steadily increasing. As a result, factories often need to add parallel production lines to boost production capacity of power batteries.

However, the increase in parallel production lines also leads to a greater demand for plant floor space, particularly in certain processing operations. For example, in the module pressurization and resting process, the pressurized battery modules are required to be transferred to a resting station. Under existing solutions, a separate resting line is required for each pressurization station, resulting in a relatively low utilization rate of individual resting lines, i.e., underutilization. This not only increases the space requirements of the production line but also raises the assembly costs of the production line.

In view of the above considerations, to address the issue of the large space requirement associated with existing power battery production lines, the present application provides a module pressurization and resting line. Through a plurality of transfer turntables, the battery modules from a plurality of pressurization lines are sequentially transferred to a single resting line. This improves the utilization rate of the resting line, reduces the assembly costs of the production line, and decreases the space required for the module pressurization and resting line, thereby reducing the space required for the battery pack production line.

The embodiments of the present application will be described in detail below with reference to the drawings.

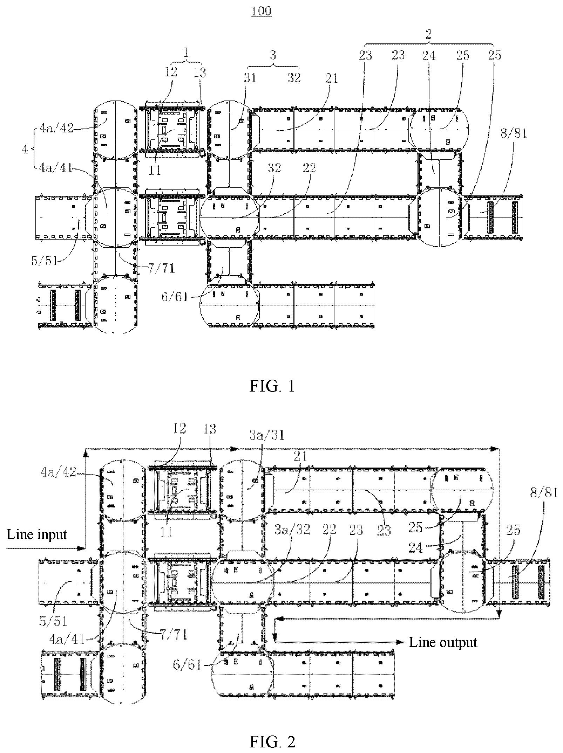

Referring to FIG. 1, FIG. 1 is a schematic plan layout diagram of an embodiment of a module pressurization and resting line 100 according to the present application. In some embodiments of the present application, the module pressurization and resting line 100 is provided with a plurality of pressurization stations 11, and the module pressurization and resting line 100 is configured to transport battery modules with heat dissipation plates bonded at bottoms thereof to the pressurization stations 11 for pressurization and then resting. The module pressurization and resting line 100 includes a plurality of pressurization lines 1, a resting line 2, and a resting transfer device 3. The plurality of pressurization lines 1 each pass through the plurality of pressurization stations 11 to transport battery modules to the corresponding pressurization stations 11, and each pressurization line 1 is provided with a pressurization output end 13. The resting line 2 is provided with a resting input end 21 and the resting line 2 is configured to allow the pressurized battery modules to undergo resting. The resting transfer device 3 includes a first transfer turntable 31 and a second transfer turntable 32. The first transfer turntable 31 is disposed between the pressurization output end 13 of one of the pressurization lines 1 and the resting input end 21 of the resting line 2, and the first transfer turntable 31, along its rotational circumferential direction, is capable of being in transfer communication with the resting input end 21. The second transfer turntable 32 is disposed between the pressurization output ends 13 of the other pressurization lines 1 and the first transfer turntable 31, where the first transfer turntable 31 and the second transfer turntable 32, along their respective rotational circumferential directions, are each provided with a first position and a second position, at the first position, the first transfer turntable 31 and the second transfer turntable 32 are each capable of being in transfer communication with the corresponding pressurization output ends 13, and at the second position, the first transfer turntable 31 and the second transfer turntable 32 are capable of being in transfer communication with each other.

It should be noted that the number of the plurality of pressurization lines 1 provided may be two, three, or even more. It can be understood that the greater the number of the pressurization lines 1 provided, the higher the load capacity utilization rate of the resting line 2 becomes, thereby resulting in higher utilization efficiency of the resting line 2 by the plurality of pressurization lines 1. In addition, the distribution of the pressurization lines 1 may be arranged based on the actual production space. In some cases, the plurality of pressurization lines 1 are arranged radially around the resting transfer device 3. Certainly, other distribution forms are also possible, and this is not limited in the embodiments. After the battery module is transported by the pressurization line 1 to the pressurization station 11, the battery module can undergo pressurization and pressure-holding operations performed by the corresponding module pressurization device, thereby allowing the thermally conductive adhesive between the heat dissipation plate and the battery module to be squeezed evenly. The function of the resting line 2 is to provide sufficient line length to accommodate a larger number of battery modules for resting. The resting line 2 can also gradually transfer the battery modules from the resting input end 21 to the resting output end 22. The thermally conductive adhesive between the battery module after resting and the heat dissipation plate is allowed to undergo sufficient bonding and curing, thereby ensuring the heat dissipation performance of the battery module.

It should be noted that, in the embodiment, the first transfer turntable 31 and the second transfer turntable 32 are both capable of rotating and bidirectionally transporting materials along a single path. As the first transfer turntable and the second transfer turntable rotate, the transporting paths of the first transfer turntable 31 and the second transfer turntable 32 can rotate, enabling the first transfer turntable and the second transfer turntable to rotate to different positions to establish communication with different lines. The specific structures of the turntables may vary, and are not limited in the embodiments. The first transfer turntable 31 and the second transfer turntable 32 are essentially identical in structure. In the embodiment, they are differentiated and designated, based on their respective functions, as the first transfer turntable 31 and the second transfer turntable 32. When positioned at the second position, the first transfer turntable 31 and the second transfer turntable 32 can align along a straight line, thereby allowing the two transfer turntables to be capable of being in transfer communication with each other. It can be understood that the second position of each first transfer turntable 31 and second transfer turntable 32 is defined relative to itself, which means that the second positions of the first transfer turntable 31 and the second transfer turntable 32 may either correspond to the same physical location or different physical locations. One or more second transfer turntables 32 may be provided, depending on the number of pressurization lines 1. When a plurality of second transfer turntables 32 are provided and arranged on the same side of the first transfer turntable 31, if the second transfer turntable 32 positioned on the outer side receives a battery module, all the transfer turntables disposed between this second transfer turntable 32 and the first transfer turntable 31 are required to be controlled to rotate to the second position to achieve the transfer of the battery module. However, it is worth noting that the plurality of second transfer turntables 32 during the rotating process can simultaneously rotate to the second position and remain on standby until the battery module transfer is completed. Subsequently, they can sequentially rotate to the second position in the direction of transfer to receive the battery module. The first transfer turntable 31 and the second transfer turntable 32 can achieve transfer communication with each other either indirectly through other transfer structures or directly through themselves, which is not limited in the embodiment.

It should be noted that the first transfer turntable 31, along its rotational circumferential direction, being capable of being in transfer communication with the resting input end 21 includes: the first transfer turntable 31 being in transfer communication with the resting input end 21 at the first position, the first transfer turntable 31 being in transfer communication with the resting input end 21 at the second position, and the first transfer turntable 31 being in transfer communication with the resting input end 21 at other positions as well, depending on the arrangement of the position of the first transfer turntable 31 and the second transfer turntable 32. For example, when a plurality of second transfer turntables 32 are provided and the first transfer turntable 31 is disposed between two second transfer turntables 32, two end parts of the first transfer turntable 31 are all occupied when the first transfer turntable 31 and the second transfer turntable 32 are at the respective second position. In this case, the resting input end 21 can only be in transfer communication with the first transfer turntable 31 at the first position or at other positions. When the first transfer turntable 31 is disposed at the end part of the whole formed by the first transfer turntable and the second transfer turntable 32, one end part of the first transfer turntable 31 is in an unoccupied position, regardless of whether the first transfer turntable is at the first position or the second position. In this case, the resting input end 21 may establish transfer communication with the first transfer turntable 31 at the first position, the second position, or other positions.

In the technical solutions of the embodiments of the present application, a plurality of pressurization lines 1 are capable of transporting battery modules with heat dissipation plates bonded at bottoms thereof to a plurality of pressurization stations 11, thereby ensuring the processing efficiency of the battery modules. After performing pressurization and pressure-holding on the battery modules and the heat dissipation plates at the pressurization stations 11, if the pressurization line 1 at which the pressurization station 11 is positioned corresponds to the first transfer turntable 31, the first transfer turntable 31 can be directly controlled to first rotate to receive the battery modules and then rotate to establish transfer communication with the resting line 2, thereby transferring the battery modules to the resting line 2. If the pressurization line 1 at which the pressurization station 11 is located corresponds to the second transfer turntable 32, the corresponding second transfer turntable 32 can first be controlled to rotate to receive the corresponding battery modules. Subsequently, both the first transfer turntable 31 and the second transfer turntable 32 are controlled to rotate to the second position, thereby transferring the corresponding battery modules to the first transfer turntable 31. Finally, the first transfer turntable 31 is controlled to rotate to establish transfer communication with the resting line 2. With this arrangement, the battery modules that have been pressurized on the plurality of pressurization lines 1 can be sequentially transferred to the resting line 2 through the coordinated transfer action of the first transfer turntable 31 and the second transfer turntable 32, without the need to separately configure an individual resting line 2 for each pressurization line 1. As a result, the single resting line 2 is fully utilized, thereby reducing the space required for the module pressurization and resting line 2, which in turn reduces the space required for the battery pack production line. Moreover, this resting transfer device 3 features a relatively orderly structural arrangement and a relatively simple structure, occupying less space.

In some embodiments, the plurality of pressurization lines 1 are arranged in parallel.

It should be noted that the pressurization line 1 is typically configured in an elongated form, and the plurality of pressurization lines 1 being arranged in parallel refers to the arrangement of the pressurization lines 1 along the width direction of the pressurization lines 1.

According to the above embodiments, adopting the parallel arrangement ensures a relatively tight configuration of the plurality of pressurization lines 1, thereby minimizing the space occupied by the module pressurization lines 1.

In some embodiments, at the first position, the first transfer turntable 31 is in transfer communication with the resting input end 21.

At the first position, one end of the first transfer turntable 31 is positioned in communication with the pressurization line 1, and the other end is in an unoccupied position.

According to the above embodiments, by configuring the first transfer turntable 31 to be further in transfer communication with the resting input end 21 at the first position, the battery module received from the pressurization line 1 can be directly transferred to the resting line 2. This eliminates the process for the first transfer turntable 31 to rotate for alignment with the resting line 2, thereby improving the transfer efficiency.

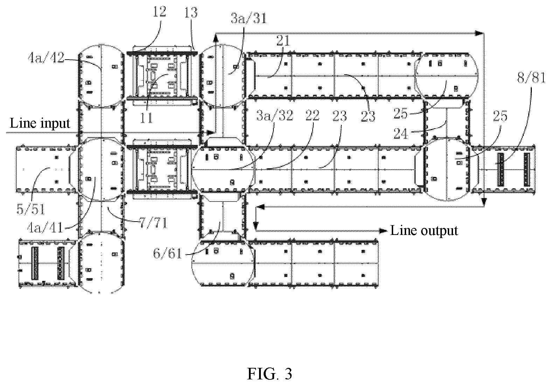

Referring to FIGs. 2 and 3, FIG. 2 is a diagram of a scheduling route of a module pressurization and resting line 100 according to the present application, and FIG. 3 is a diagram of another scheduling route of a module pressurization and resting line 100 according to the present application. In some embodiments, the module pressurization and resting line 100 further includes an output line 6, the output line 6 includes an output loading end 61; the resting line 2 is further provided with a resting output end 22; the second transfer turntable 32 is disposed between the resting output end 22 and the output loading end 61, and the second transfer turntable 32, along its rotational circumferential direction, is capable of being in transfer communication with the resting output end 22 and the output loading end 61.

It should be noted that after the battery module is adequately rested on the resting line 2, the resting line is further required to offload and transfer the battery module for subsequent processing. Therefore, the resting line 2 is typically further provided with a resting output end 22. Since the second transfer turntable 32 is not required to establish communication with the resting input end 21, the second transfer turntable 32 can establish communication with the resting output end 22 in any of a plurality of positions, which is not limited in the embodiments. The second transfer turntable 32 being disposed between the resting output end 22 and the output loading end 61 means that, when the transfer paths of the resting output end 22 and the output loading end 61 are the same, the second transfer turntable 32 is disposed on this transfer path; when the transfer paths of the resting output end 22 and the output loading end 61 differ, the second transfer turntable 32 is disposed at the intersection of the two transfer paths.

Referring to FIG. 2, the pressurization line 1 corresponding to the first transfer turntable 31 completes the pressurization first, and the battery module is directly transferred to the resting line 2 through the first transfer turntable 31 and then transferred to the output line 6 through the second transfer turntable 32. Referring to FIG. 3, the pressurization line 1 corresponding to the second transfer turntable 32 completes the pressurization first, and the battery module is directly transferred to the first transfer turntable 31 through the second transfer turntable 32, then transferred to the resting line 2 through the first transfer turntable 31, and finally transferred to the output line 6 through the second transfer turntable 32.

According to the above embodiments, by utilizing one of the second transfer turntables 32 as the output turntable of the resting line 2, the battery modules that have completed the resting process can be transferred to the output line 6. In one aspect, this improves the utilization efficiency of the second transfer turntable 32, and in another aspect, it reduces the space occupied by the module pressurization and resting line 100, while also lowering the assembly cost.

In some embodiments, at the first position, the second transfer turntable 32 is further in transfer communication with the resting input end 21; and/or at the second position, the second transfer turntable 32 is further in transfer communication with the output loading end 61.

It should be noted that regardless of whether the second transfer turntable 32 is at the first position or the second position, one end of the turntable is always in an unoccupied position. Specifically, at the first position, one end of the second transfer turntable 32 is in communication with the corresponding pressurization line 1, and the other end is in an unoccupied position; at the second position, one end of the second transfer turntable 32 is in transfer communication with the first transfer turntable 31, and the other end is in an unoccupied position.

According to the above embodiments, regardless of whether the second transfer turntable 32 is configured to be in transfer communication with the resting line 2 at the first position, or the second transfer turntable 32 is configured to be in transfer communication with the output line 6 at the second position, the number of working position states of the second transfer turntable 32 can be reduced. This facilitates the control of the second transfer turntable, ensuring the positioning accuracy of the second transfer turntable 32.

In some embodiments, the resting line 2 includes two first resting segments 23 arranged in parallel, two transition turntables 25, and a second resting segment 24, and the two first resting segments 23 are arranged in parallel. The resting input end 21 and the resting output end 22 are each formed at one end of each of the two first resting segments 23, and the other end of each of the two first resting segments 23 is configured as a transition end. The two transition turntables 25 are arranged corresponding to the two transition ends, respectively, the second resting segment 24 is disposed between the two transition turntables 25, and during rotational travel of the transition turntables 25, the second resting segment 24 is capable of being in transfer communication with the corresponding transition ends.

It should be noted that the resting input end 21 and the resting output end 22 of the resting line 2 are arranged corresponding to the first transfer turntable 31 and the second transfer turntable 32, respectively, thereby forming a rotational material transport mechanism. Accordingly, the transporting path of the resting line 2 may be in an arcuate shape or a zigzag shape. In the embodiments, the resting line 2 includes two first resting segments 23 arranged in parallel (i.e., a zigzag shape), and cooperates with two transition turntables 25 and the second resting segment 24 to achieve transfer communication. It should be noted that not only the first resting segment 23 is capable of resting battery modules, but the second resting segment 24 can also participate in the resting of the battery modules.

According to the above embodiments, by arranging the two first resting segments 23 of the resting line 2 in parallel, a rotating transfer path can be formed, thereby significantly reducing the space occupied by the resting line 2. Moreover, the second resting segment 24, in combination with the two transition turntables 25, can ensure the efficient transfer of battery modules on the two first resting segments 23.

In some embodiments, the module pressurization and resting line 100 further includes a defective transfer line 8, and the defective transfer line 8 is provided with a defective receiving end 81. One of the transition turntables 25, along its rotational circumferential direction, is further capable of being in transfer communication with the defective receiving end 81.

It should be noted that after the pressurization at the pressurization station 11 is completed, defective battery modules may occur. These battery modules are not permitted to proceed to the next processing station for processing. The function of the transition turntable 25 is to transfer the battery modules from the upstream first resting segment 23 to the second resting segment 24 or to transfer the battery modules from the second resting segment 24 to the downstream first resting segment 23. Additionally, the transition turntable may have multiple unoccupied positions along its rotational circumferential direction for establishing communication with the defective transfer line 8.

According to the above embodiments, the corresponding transition turntable 25 can screen out defective battery modules from the resting line 2, thus directing them to the defective transfer line 8. This prevents defective battery modules from mixing with qualified battery modules, thereby avoiding negative impact on production.

In some embodiments, the pressurization line 1 is provided with a pressurization input end 12; the module pressurization and resting line 100 further includes an input line 5 and a pressurization transfer device 4, the input line 5 is provided with an input offloading end 51, and the input line 5 is configured to transport battery modules with heat dissipation plates bonded at bottoms thereof; the pressurization transfer device 4 includes at least one pressurization transfer turntable 4a, and the at least one pressurization transfer turntable 4a is capable of selectively establishing transfer communication between one of a plurality of pressurization input ends 12 and the input offloading end 51.

It should be noted that the at least one pressurization transfer turntable 4a is capable of selectively establishing transfer communication between one of a plurality of pressurization input ends 12 and the input offloading end 51. The structural form of the pressurization transfer turntable may vary. For example, the pressurization transfer device 4 includes a single pressurization transfer turntable 4a, a plurality of transfer paths are provided on the single pressurization transfer turntable 4a, and each transfer path is used to establish communication between the pressurization line 1 and the input line 5 at the corresponding position. When the pressurization transfer turntable 4a rotates to the corresponding position, the corresponding transfer path can establish communication between the corresponding pressurization line 1 and the input line 5. Certainly, the pressurization transfer device 4 may also include a plurality of pressurization transfer turntables 4a, and the battery modules are transferred from the input line 5 to the corresponding pressurization line 1 through the mutual cooperation of the loading turntables. For example, a main turntable and a plurality of sub-turntables may be provided, the main turntable is disposed corresponding to the input line 5 to receive the battery modules from the input line 5, and the plurality of sub-turntables are each arranged corresponding to the plurality of pressurization lines 1 to transfer the battery modules received by the main turntable to the corresponding pressurization lines 1.

According to the above embodiments, by using a single input line 5 to sequentially transfer battery modules to a plurality of pressurization lines 1 through the pressurization transfer turntable 4a, the input line 5 is fully utilized. This ensures the loading efficiency of the battery modules while also reducing the space required for the module pressurization and resting line 100, thereby reducing the space required for the battery pack production line.

Referring to FIGs. 2 and 3, in some embodiments, the pressurization transfer device 4 includes a plurality of pressurization transfer turntables 4a, the plurality of pressurization transfer turntables 4a include a third transfer turntable 41 and a fourth transfer turntable 42, the third transfer turntable 41 is disposed between the pressurization input end 12 of one of the pressurization lines 1 and the input offloading end 51 of the input line 5, and the third transfer turntable 41, along its rotational circumferential direction, is capable of being in transfer communication with the input offloading end 51; the fourth transfer turntable 42 is disposed between the pressurization input end 12 of the other pressurization lines 1 and the third transfer turntable 41, where the third transfer turntable 41 and the fourth transfer turntable 42, along their respective rotational circumferential directions, are each provided with a third position and a fourth position. At the third position, third transfer turntable 41 and the fourth transfer turntable 42 are each capable of being in transfer communication with the corresponding pressurization output ends 12, and at the fourth position, the third transfer turntable 41 and the fourth transfer turntable 42 are capable of being in transfer communication with each other.

It should be noted that, similar to the first transfer turntable 31 and the second transfer turntable 32, in the embodiments, the pressurization transfer turntable 4a is capable of rotating and bidirectionally transporting materials along a single path. As the pressurization transfer turntable rotates, the transporting path of the pressurization transfer turntable 4a can rotate, enabling the pressurization transfer turntable to rotate to different positions to establish communication with different lines. The specific structure of the turntable may vary, and is not limited in the embodiment. The second transfer turntable 32 and the third transfer turntable 41 are essentially pressurization transfer turntables 4a of identical structure. In the embodiments, they are differentiated and designated, based on their respective functions, as the third transfer turntable 41 and the fourth transfer turntable 42. Since the third transfer turntable 41 and the fourth transfer turntable 42 are capable of being in transfer communication with each other at the fourth position, and both being in transfer communication with the corresponding pressurization input ends 12 at the third position, it is easy to understand that, in this configuration, the plurality of pressurization lines 1 are arranged in parallel, and the plurality of pressurization transfer turntables 4a are also arranged in parallel, such that the third transfer turntable 41 and the fourth transfer turntable 42, when positioned at the fourth position, can align along a straight line, thus being capable of being in transfer communication with each other. One or more fourth transfer turntables 42 may be provided, depending on the number of the pressurization lines 1. When a plurality of fourth transfer turntables 42 are provided and arranged on the same side of the third transfer turntable 41, if the third transfer turntable 41 receives a battery module transferred from the input line 5 and if the pressurization line 1 corresponding to a fourth transfer turntable 42 positioned on the outer side is in an idle state, all the transfer turntables disposed between this fourth transfer turntable 42 and the third transfer turntable 41 are required to be controlled to rotate to the fourth position to achieve the transfer of the battery module. However, it is worth noting that the plurality of fourth transfer turntables 42 during the rotating process can simultaneously rotate to the fourth position and remain on standby until the battery module transfer is completed. Subsequently, they can sequentially rotate to the fourth position in the direction of transfer to receive the battery module. The third transfer turntable 41 and the fourth transfer turntable 42 can achieve transfer communication with each other either indirectly through other transfer structures or directly through themselves, which is not limited in the embodiment.

It should be noted that the third transfer turntable 41, along its rotational circumferential direction, being capable of being in transfer communication with the input offloading end 51 includes: the third transfer turntable 41 being in transfer communication with the input offloading end 51 at the third position, the third transfer turntable 41 being in transfer communication with the input offloading end 51 at the second position, and the third transfer turntable 41 being in transfer communication with the input offloading end 51 at other positions as well, depending on the arrangement of the position of the third transfer turntable 41 and the fourth transfer turntable 42. For example, when a plurality of fourth transfer turntables 42 are provided and the third transfer turntable 41 is disposed between two fourth transfer turntables 42, two end parts of the third transfer turntable 41 are all occupied when the third transfer turntable 41 and the fourth transfer turntable 42 are at the fourth position. In this case, the input offloading end 51 of the input line 5 can only be in transfer communication with the third transfer turntable 41 at the third position or at other positions. When the third transfer turntable 41 is disposed at the end part of the plurality of pressurization transfer turntable 4a, one end part of the third transfer turntable 41 is in an unoccupied position, regardless of whether the third transfer turntable is at the third position or the fourth position. In this case, the input offloading end 51 of the input line 5 may establish transfer communication with the third transfer turntable 41 at the third position, the fourth position, or other positions.

Referring to FIG. 2, the pressurization line 1 corresponding to the fourth transfer turntable 42 is first in an idle state, and the battery module is transferred to the fourth transfer turntable 42 through the third transfer turntable 41 and then transferred to the pressurization line 1 through the fourth transfer turntable 42. Referring to FIG. 3, the pressurization line 1 corresponding to the third transfer turntable 41 is first in an idle state, and the battery module is directly transferred to the pressurization line 1 through the third transfer turntable 41.

According to the above embodiments, after the third transfer turntable 41 is controlled to rotate to establish transfer communication with the input offloading end 51 of the input line 5 and receive the battery module, if the pressurization line 1 corresponding to the third transfer turntable 41 is in an idle state, the third transfer turntable 41 can be directly controlled to rotate and transport the battery module to the corresponding pressurization line 1. If the pressurization line 1 corresponding to the fourth transfer turntable 42 is in an idle state, the third transfer turntable 41 and the fourth transfer turntable 42 can be controlled to rotate to the fourth position, thereby transferring the battery module to the corresponding fourth transfer turntable 42 under the transport action of the turntables. Subsequently, the corresponding fourth transfer turntable 42 is controlled to rotate to establish transfer communication with the pressurization line 1, thereby achieving the routing of battery modules from the input line 5 to different pressurization lines 1. This pressurization transfer device 4 features a relatively orderly structural arrangement and a relatively simple structure, occupying less space.

In some embodiments, at the third position, the third transfer turntable 41 is in transfer communication with the input offloading end 51.

It should be noted that, at the third position, one end of the third transfer turntable 41 is in transfer communication with the corresponding pressurization line 1, and the other end is in an unoccupied position.

According to the above embodiments, by configuring the third transfer turntable 41 to be further in transfer communication with the input line 5 at the third position, if the pressurization line 1 corresponding to the third transfer turntable 41 is in an idle state, the battery module received from the input line 5 can be directly transferred to the pressurization line 1 through the third transfer turntable 41. This eliminates the process for the third transfer turntable 41 to rotate for alignment with the pressurization line 1, thereby improving the transfer efficiency.

In some embodiments, the input line 5 is further configured to transport a vacant tray; the module pressurization and resting line 100 further includes a tray transfer line 7, and the tray transfer line 7 is provided with a tray receiving end 71 for transferring the vacant tray; the third transfer turntable 41, along its rotational circumferential direction, is capable of being in transfer communication with the tray receiving end 71.

It should be noted that the upstream process of the pressurization station 11 is the adhesive application to the heat dissipation plate. The heat dissipation plate, after adhesive application, is mounted to the bottom of the battery module (at this point, the bottom of the battery module faces upward and is placed on a first tray). The entire assembly, including the heat dissipation plate, the battery module, and the first tray, is then flipped by a flipping gripper and lowered onto a second tray (at this point, the heat dissipation plate at the bottom of the battery module contacts the second tray). The flipping gripper detaches the first tray from the battery module, and after the second tray is transported by the transporting line to the next station, the first tray is placed back onto the transporting line. In other words, along the transporting path of the transporting line, there are always second trays loaded with battery modules and vacant first trays. The second trays are required to carry the battery modules to the pressurization station 11 for pressurization and pressure-holding operations, while the first trays do not need to enter the pressurization station 11.

According to the above embodiments, the third transfer turntable 41 is also capable of rotating to establish transfer communication with the tray receiving end. Therefore, when a vacant tray is transported from the input line 5, the third transfer turntable 41 can promptly transfer the vacant tray to the tray transfer line 7, thereby preventing vacant trays from entering the pressurization stations 11 and occupying the pressurization lines 1, which improves the processing efficiency of the module pressurization and resting line 100.

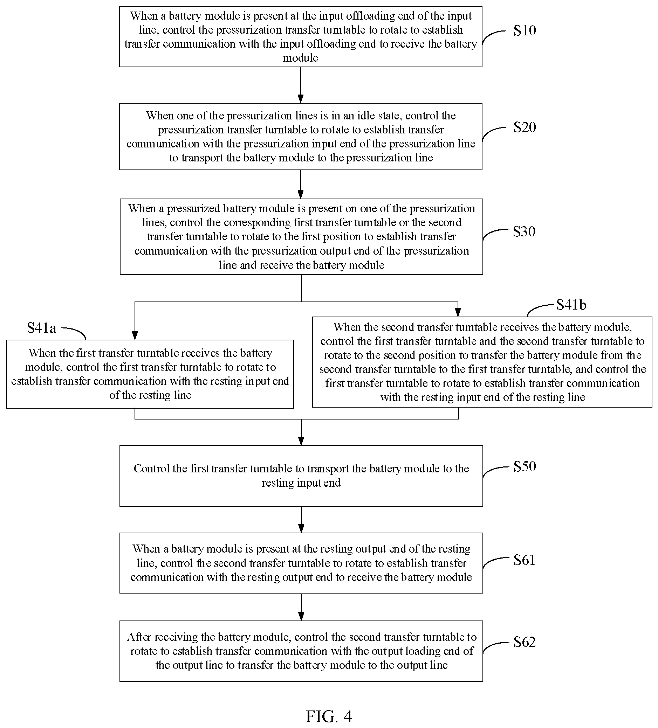

The present application further provides a scheduling method for a module pressurization and resting line 100. Referring to FIG. 4, FIG. 4 is a schematic flow chart of a first embodiment of the scheduling method according to the present application. The module pressurization and resting line includes the module pressurization and resting line according to any one of the aspects described above.

The scheduling method includes:
a discharging step:
S30, when a pressurized battery module is present on one of the pressurization lines 1, controlling the corresponding first transfer turntable 31 or the second transfer turntable 32 to rotate to the first position to establish transfer communication with the pressurization output end 13 of the pressurization line 1 and receive the battery module,
where the "presence of a pressurized battery module on one of the pressurization lines 1" serves as a prerequisite for "controlling the corresponding first transfer turntable 31 or the second transfer turntable 32 to rotate", and there are various ways to identify the "presence of a pressurized battery module on one of the pressurization lines 1", such as identification through feedback from the pressurization device, which is not limited in the embodiments; it is worth noting that if the initial position of the first transfer turntable 31 or the second transfer turntable 32 is already at the first position, the first transfer turntable 31 or the second transfer turntable 32 does not need to rotate;
a transferring step, including:
   S41a, when the first transfer turntable 31 receives the battery module, controlling the first transfer turntable 31 to rotate to establish transfer communication with the resting input end 21 of the resting line 2;
   S41b, when the second transfer turntable 32 receives the battery module, controlling the first transfer turntable 31 and the second transfer turntable 32 to rotate to the second position to transfer the battery module from the second transfer turntable 32 to the first transfer turntable 31, and controlling the first transfer turntable 31 to rotate to establish transfer communication with the resting input end 21 of the resting line 2,
   where in the embodiments, the first transfer turntable 31, along its rotational circumferential direction, is further capable of being in communication with the resting input end 21 of the resting line 2, and whether this communication occurs at the first position or the second position is not limited in the embodiments; the first transfer turntable 31 and the second transfer turntable 32, along their respective rotational circumferential directions, are each provided with the first position and the second position, at the first position, the first transfer turntable 31 and the second transfer turntable 32 are each in transfer communication with the corresponding pressurization lines 1, and at the second position, the first transfer turntable 31 and the second transfer turntable 32 are also capable of being in transfer communication with each other along their arrangement direction, thereby forming a transfer passage; the first transfer turntable 31 and the second transfer turntable 32 also have a powered conveying function and can actively transport the battery modules to the resting line 2, and the resting line 2 also has a powered conveying function and can further transfer the received battery modules;
   a loading step:
      S50, controlling the first transfer turntable 31 to transport the battery module to the resting input end 21.

In the technical solutions of the embodiments of the present application, in the transferring step, the first transfer turntable 31 functions to transfer battery modules to the resting line 2. When a pressurized battery module is present on one of the pressurization lines 1, if the pressurization line 1 corresponds to the first transfer turntable 31, the first transfer turntable 31 can be correspondingly controlled to rotate to the first position, thereby establishing transfer communication with the pressurization line 1. Since the first transfer turntable 31 also corresponds to the resting line 2, the battery module can be directly transferred to the resting line 2 through the first transfer turntable 31. If the pressurization line 1 corresponds to the second transfer turntable 32, the second transfer turntable 32 can be correspondingly controlled to rotate to the first position, thereby establishing transfer communication with the pressurization line 1 to receive the battery module. Subsequently, the first transfer turntable 31 and the second transfer turntable 32 are required to be controlled to rotate to the second position, thereby transferring the battery module on the second transfer turntable 32 to the first transfer turntable 31. The battery module is then further transferred to the resting line 2 through the first transfer turntable 31, thereby completing the sequential transfer of battery modules from a plurality of pressurization lines 1 to the resting line 2. Since the resting line 2 has a powered conveying function, the resting line can further transport the received battery modules, ensuring that the resting input end 21 of the resting line is in an unoccupied position. This allows the resting input end to receive the next battery module at any time, preventing battery modules from accumulating at the resting input end 21 and ensuring efficient routing of the battery modules. Moreover, by allowing a plurality of pressurization lines 1 to share a single resting line 2, the space required for the module pressurization and resting line 2 is reduced.

In some embodiments, the second transfer turntable 32 also corresponds to the resting output end 22 of the resting line 2, and the module pressurization and resting line 100 further includes the output line 6.

After the loading step, the method further includes:
an offloading step:
S61, when a battery module is present at the resting output end 22 of the resting line 2, controlling the second transfer turntable 32 to rotate to establish transfer communication with the resting output end 22 to receive the battery module;
S62, after receiving the battery module, controlling the second transfer turntable 32 to rotate to establish transfer communication with the output loading end 61 of the output line 6 to transfer the battery module to the output line 6.

According to the above embodiments, an offloading step is further provided. The second transfer turntable 32 is disposed between the resting output end 22 and the output line 6. The second transfer turntable 32 is capable of receiving battery modules from the resting output end 22 and transferring the battery modules to the output line 6, thereby completing the offloading operation of the battery modules. This method makes full use of the second transfer turntable 32, enabling the second transfer turntable not only to transfer battery modules to the first transfer turntable 31 but also to transfer battery modules to the output line 6.

With continued reference to FIG. 4, in some embodiments, the module pressurization and resting line 100 further includes the input line 5 and at least one pressurization transfer turntable 4a.

Prior to the discharging step, the scheduling method further includes:
S10, a receiving step: when a battery module is present at the input offloading end 51 of the input line 5, controlling the pressurization transfer turntable 4a to rotate to establish transfer communication with the input offloading end 51 to receive the battery module,
where the "presence of a battery module at the input offloading end 51"serves as a prerequisite for "controlling the pressurization transfer turntable 4a to rotate", and there are various ways to identify the presence of a battery module at the input loading end, which is not limited in the embodiments; subsequently, the pressurization transfer turntable 4a can rotate to establish transfer communication with the input offloading end 51 of the input line 5; it is worth noting that, under certain circumstances, the pressurization transfer turntable 4a may maintain transfer communication with the output line 6 at the initial position, and in this case, if a battery module is present at the input offloading end 51, the pressurization transfer turntable 4a does not need to rotate; additionally, controlling the pressurization transfer turntable 4a to rotate by half a revolution or a full revolution according to its structure can also re-establish transfer communication with the input line 5, and the aforementioned scenarios are all encompassed by the protection scope of the embodiment;
S20, a feeding step: when one of the pressurization lines 1 is in an idle state, controlling the pressurization transfer turntable 4a to rotate to establish transfer communication with the pressurization input end 12 of the pressurization line 1 to transport the battery module to the pressurization line 1,
where "one of the pressurization lines 1 being in an idle state" serves as a prerequisite for "controlling the pressurization transfer turntable 4a to rotate", and subsequently, the pressurization transfer turntable 4a, loaded with battery modules, can rotate to establish transfer communication with the corresponding pressurization line 1; it is worth noting that, under certain circumstances, the pressurization transfer turntable 4a, while being in communication with the input line 5, is also capable of being in transfer communication with the corresponding pressurization line 1, and in this case, after receiving the battery modules, the pressurization transfer turntable 4a does not need to rotate; additionally, controlling the pressurization transfer turntable 4a to rotate by half a revolution or a full revolution according to its structure can also re-establish transfer communication with the corresponding pressurization line 1, and the aforementioned scenarios are all encompassed by the protection scope of the embodiments.

According to the above embodiments, when one of the pressurization lines 1 is in an idle state, the pressurization line 1 can be identified, and the pressurization transfer turntable 4a can rotate to the position corresponding to the pressurization line 1, thereby transferring the battery module received from the input line 5 to the pressurization line 1. The "transport of the battery module by the input line 5 to the input offloading end 51" and the "idle state of one of the pressurization lines 1" are synchronized within a corresponding production takt time. With the continuous supply of battery modules on the input line 5, the pressurization transfer turntable 4a can continuously transfer battery modules to a plurality of pressurization lines 1. Meanwhile, the pressurization lines 1 can continuously pressurize the battery modules sequentially, preventing battery modules from accumulating at the input offloading end 51 and ensuring efficient routing of the battery modules. Moreover, by allowing a plurality of pressurization lines 1 to share a single input line 5, the space required for the module pressurization and resting line 100 is reduced.

In some embodiments, the plurality of pressurization lines 1 are arranged in parallel, and each of the pressurization input ends 12 of the pressurization lines 1 is provided with the pressurization transfer turntable 4a, the plurality of pressurization transfer turntables 4a include the third transfer turntable 41 and the fourth transfer turntable 42, the third transfer turntable 41 and the fourth transfer turntable 42 are each provided with the third position for establishing transfer communication with the plurality of pressurization input ends 12 and the fourth position for establishing transfer communication between the third transfer turntable and the fourth transfer turntable, and the third transfer turntable 41 further corresponds to the input offloading end of the input line 5.

The receiving step includes:
when a battery module is present at the input offloading end 51 of the input line 5, controlling the third transfer turntable 41 to rotate to establish transfer communication with the input offloading end 51 to receive the battery module.

The feeding step includes:
when one of the pressurization lines 1 is in an idle state and the pressurization input end 12 of the pressurization line 1 corresponds to the third transfer turntable 41, controlling the third transfer turntable 41 to rotate to the third position to transport the battery module to the pressurization input end 12;
when one of the pressurization lines 1 is in an idle state and the pressurization input end 12 of the pressurization line 1 corresponds to the fourth transfer turntable 42, controlling the fourth transfer turntable 42 and the third transfer turntable 41 to rotate to the fourth position to transfer the battery module to the fourth transfer turntable 42, and controlling the fourth transfer turntable 42 to rotate to the third position to transport the battery module to the pressurization line 1.

In the embodiments, each pressurization line 1 corresponds to one pressurization transfer turntable 4a. The plurality of pressurization transfer turntables 4a are categorized into two types: the third transfer turntable 41 and the fourth transfer turntable 42. The third transfer turntable 41 also corresponds to the input line 5. Accordingly, the third transfer turntable 41, along its rotational circumferential direction, can further be in communication with the input offloading end 51 of the input line 5, and whether the communication occurs at the third position or the fourth position is not limited in the embodiment. Since the plurality of pressurization lines 1 are arranged in parallel, the plurality of pressurization transfer turntables 4a are also arranged in parallel. The plurality of pressurization transfer turntables 4a, along their respective rotational circumferential directions, are each provided with the third position and the fourth position. At the third position, the plurality of pressurization transfer turntables 4a are each in transfer communication with the corresponding pressurization lines 1, and at the fourth position, the plurality of pressurization transfer turntables 4a are also capable of being in transfer communication with each other along their arrangement direction, thereby forming a transfer passage.

According to the above embodiments, in the feeding step, the third transfer turntable 41 functions to receive battery modules from the input line 5. After receiving the battery modules, when one of the pressurization lines 1 is in an idle state, and if the pressurization line 1 corresponds to the third transfer turntable 41, the third transfer turntable 41 can directly rotate to the third position to establish transfer communication with the pressurization line 1. If the pressurization line 1 corresponds to the fourth transfer turntable 42, the third transfer turntable 41 and the fourth transfer turntable 42 can rotate to the fourth position to establish transfer communication with each other, thereby enabling the battery modules to be transferred from the third transfer turntable 41 to the fourth transfer turntable 42. Subsequently, the fourth transfer turntable 42 can rotate to the third position to establish transfer communication with the pressurization line 1. By configuring one of the pressurization transfer turntables 4a as the third transfer turntable 41, the turntable is fully utilized. Additionally, by rotating a plurality of pressurization transfer turntables 4a to the fourth position for mutual communication, the battery modules can be transferred to the corresponding lines. The resting transfer device 3 features a relatively regular configuration and a relatively simple structure, occupying less space.

In some embodiments, the input line 5 is further configured to transport a vacant tray, and the module pressurization and resting line 100 further includes a tray transfer line 7.

The scheduling method further includes:
a tray transfer step:
when the input line 5 transports vacant trays, controlling the pressurization transfer turntable 4a to rotate to establish transfer communication with the input offloading end 51 of the input line 5 to receive the vacant trays;
controlling the pressurization transfer turntable 4a to rotate to establish transfer communication with the tray receiving end 71 of the tray transfer line 7 and transport the vacant trays to the tray transfer line 7.

According to the above embodiments, the scheduling method further includes a tray transfer step. The pressurization transfer turntable 4a is disposed between the input line 5 and the tray transfer line 7, which enables the pressurization transfer turntable 4a to receive vacant trays and transfer them to the tray transfer line 7, thereby achieving the offloading of vacant trays. This prevents vacant trays from occupying the pressurization line 1, thereby improving the processing efficiency of the module pressurization and resting line 100.

Finally, it should be noted that the above embodiments are only used to illustrate the technical solutions of the present application, but not to limit them. Although the present application has been described in detail with reference to the foregoing embodiments, those of ordinary skill in the art should understand that they can still modify the technical solutions recorded in the foregoing embodiments or make equivalent substitutions for some or all of the technical features; however, these modifications or substitutions do not make the essence of the corresponding technical solutions deviate from the spirit and scope of the technical solutions in the embodiments of the present application, and these modifications or substitutions shall all fall within the scope of claims and specification of the present application. In particular, the technical features mentioned in the embodiments may be combined in any manner as long as there are no structural conflicts. The present application is not limited to the specific embodiments disclosed herein, but encompasses all technical solutions falling within the scope of the claims.

## Claims

1. A module pressurization and resting line, comprising a plurality of pressurization stations, the module pressurization and resting line being configured to transport battery modules with heat dissipation plates bonded at bottoms thereof to the pressurization stations for pressurization and then resting, the module pressurization and resting line comprising:
a plurality of pressurization lines, each passing through the plurality of pressurization stations to transport battery modules to corresponding pressurization stations, each of the pressurization lines being provided with a pressurization output end;
a resting line, having a resting input end, the resting line being configured to allow pressurized battery modules to rest; and
a resting transfer device, comprising a first transfer turntable and a second transfer turntable, wherein the first transfer turntable is disposed between the pressurization output end of one of the pressurization lines and the resting input end of the resting line, the first transfer turntable, along its rotational circumferential direction, is capable of being in transfer communication with the resting input end; the second transfer turntable is disposed between the pressurization output ends of the other pressurization lines and the first transfer turntable, wherein the first transfer turntable and the second transfer turntable, along their respective rotational circumferential directions, are each provided with a first position and a second position, at the first position, the first transfer turntable and the second transfer turntable are each capable of being in transfer communication with the corresponding pressurization output ends, and at the second position, the first transfer turntable and the second transfer turntable are capable of being in transfer communication with each other.

2. The module pressurization and resting line according to claim 1, wherein at the first position, the first transfer turntable is in transfer communication with the resting input end.

3. The module pressurization and resting line according to claim 1, further comprising an output line, wherein the output line comprises an output loading end;
the resting line is further provided with a resting output end;
the second transfer turntable is disposed between the resting output end and the output loading end, and the second transfer turntable, along its rotational circumferential direction, is capable of being in transfer communication with the resting output end and the output loading end.

4. The module pressurization and resting line according to claim 3, wherein at the first position, the first transfer turntable is in transfer communication with the resting input end.

5. The module pressurization and resting line according to claim 3, wherein at the first position, the second transfer turntable is further in transfer communication with the resting input end; and/or
at the second position, the second transfer turntable is further in transfer communication with the output loading end.

6. The module pressurization and resting line according to claim 3, wherein the resting line comprises:
two first resting segments arranged in parallel, wherein the resting input end and the resting output end are each formed at one end of each of the two first resting segments, and the other end of each of the two first resting segments is configured as a transition end;
two transition turntables, arranged corresponding to the two transition ends, respectively; and
a second resting segment, disposed between the two transition turntables,
wherein, during rotational travel of the transition turntables, the second resting segment is capable of being in transfer communication with the corresponding transition ends.

7. The module pressurization and resting line according to claim 6, wherein at the first position, the second transfer turntable is further in transfer communication with the resting input end; and/or
at the second position, the second transfer turntable is further in transfer communication with the output loading end.

8. The module pressurization and resting line according to claim 7, further comprising a defective transfer line, wherein the defective transfer line is provided with a defective receiving end;
one of the transition turntables, along its rotational circumferential direction, is further capable of being in transfer communication with the defective receiving end.

9. The module pressurization and resting line according to any one of claims 1 to 8, wherein the plurality of pressurization lines are arranged in parallel.

10. The module pressurization and resting line according to any one of claims 1 to 8, wherein a plurality of second transfer turntables are provided and disposed on the same side as the first transfer turntable.

11. The module pressurization and resting line according to any one of claims 1 to 8, wherein the pressurization line is provided with a pressurization input end;
the module pressurization and resting line further comprises:
an input line, having an input offloading end, the input line being configured to transport battery modules with heat dissipation plates bonded at bottoms thereof; and
a pressurization transfer device, comprising at least one pressurization transfer turntable, wherein the at least one pressurization transfer turntable is capable of selectively establishing transfer communication between one of a plurality of pressurization input ends and the input offloading end.

12. The module pressurization and resting line according to claim 11, wherein the pressurization transfer device comprises a plurality of pressurization transfer turntables, the plurality of pressurization transfer turntables comprising:
a third transfer turntable, disposed between the pressurization input end of one of the pressurization lines and the input offloading end of the input line, wherein the third transfer turntable, along its rotational circumferential direction, is capable of being in transfer communication with the input offloading end; and
a fourth transfer turntable, disposed between the pressurization input ends of the other pressurization lines and the third transfer turntable,
wherein the third transfer turntable and the fourth transfer turntable, along their respective rotational circumferential directions, are each provided with a third position and a fourth position, at the third position, the third transfer turntable and the fourth transfer turntable are each capable of being in transfer communication with the corresponding pressurization input ends, and at the fourth position, the third transfer turntable and the fourth transfer turntable are capable of being in transfer communication with each other.

13. The module pressurization and resting line according to claim 12, wherein at the third position, the third transfer turntable is in transfer communication with the input offloading end.

14. The module pressurization and resting line according to claim 12, wherein the input line is further configured to transport a vacant tray;
the module pressurization and resting line further comprises a tray transfer line, and the tray transfer line is provided with a tray receiving end for transferring the vacant tray;
the third transfer turntable, along its rotational circumferential direction, is capable of being in transfer communication with the tray receiving end.

15. The module pressurization and resting line according to claim 14, wherein at the third position, the third transfer turntable is in transfer communication with the input offloading end.

16. A scheduling method for a module pressurization and resting line, wherein the module pressurization and resting line comprises the module pressurization and resting line according to any one of claims 1 to 15;
the scheduling method comprises:
a discharging step:
when a pressurized battery module is present on one of the pressurization lines, controlling the corresponding first transfer turntable or the second transfer turntable to rotate to the first position to establish transfer communication with the pressurization output end of the pressurization line and receive the battery module;
a transferring step, comprising:
when the first transfer turntable receives the battery module, controlling the first transfer turntable to rotate to establish transfer communication with the resting input end of the resting line;
when the second transfer turntable receives the battery module, controlling the first transfer turntable and the second transfer turntable to rotate to the second position to transfer the battery module from the second transfer turntable to the first transfer turntable, and controlling the first transfer turntable to rotate to establish transfer communication with the resting input end of the resting line; and
a loading step: controlling the first transfer turntable to transport the battery module to the resting input end.

17. The scheduling method according to claim 16, wherein the second transfer turntable further corresponds to the resting output end of the resting line;
the module pressurization and resting line further comprises an output line;
after the loading step, the method further comprises:
an offloading step:
when a battery module is present at the resting output end of the resting line, controlling the second transfer turntable to rotate to establish transfer communication with the resting output end to receive the battery module;
after receiving the battery module, controlling the second transfer turntable to rotate to establish transfer communication with the output loading end of the output line to transfer the battery module to the output line.

18. The scheduling method according to claim 16, wherein the module pressurization and resting line further comprises an input line and at least one pressurization transfer turntable;
prior to the discharging step, the scheduling method further comprises:
a receiving step: when a battery module is present at the input offloading end of the input line, controlling the pressurization transfer turntable to rotate to establish transfer communication with the input offloading end to receive the battery module; and
a feeding step: when one of the pressurization lines is in an idle state, controlling the pressurization transfer turntable to rotate to establish transfer communication with the pressurization input end of the pressurization line to transport the battery module to the pressurization line.

19. The scheduling method according to claim 18, wherein the plurality of pressurization lines are arranged in parallel, and each of the pressurization input ends of the pressurization lines is provided with the pressurization transfer turntable, the plurality of pressurization transfer turntables comprise a third transfer turntable and a fourth transfer turntable, the third transfer turntable and the fourth transfer turntable are each provided with a third position for establishing transfer communication with the plurality of pressurization input ends and a fourth position for establishing transfer communication between the third transfer turntable and the fourth transfer turntable, and the third transfer turntable further corresponds to the input offloading end of the input line;
the receiving step comprises:
when a battery module is present at the input offloading end of the input line, controlling the third transfer turntable to rotate to establish transfer communication with the input offloading end to receive the battery module;
the feeding step comprises:
when one of the pressurization lines is in an idle state and the pressurization input end of the pressurization line corresponds to the third transfer turntable, controlling the third transfer turntable to rotate to the third position to transport the battery module to the pressurization input end;
when one of the pressurization lines is in an idle state and the pressurization input end of the pressurization line corresponds to the fourth transfer turntable, controlling the fourth transfer turntable and the third transfer turntable to rotate to the fourth position to transfer the battery module to the fourth transfer turntable, and controlling the fourth transfer turntable to rotate to the third position to transport the battery module to the pressurization line.

20. The scheduling method according to claim 18, wherein the input line is further configured to transport a vacant tray, and the module pressurization and resting line further comprises a tray transfer line;
the scheduling method further comprises:
a tray transfer step:
when the input line transports vacant trays, controlling the pressurization transfer turntable to rotate to establish transfer communication with the input offloading end of the input line to receive the vacant trays;
controlling the pressurization transfer turntable to rotate to establish transfer communication with a tray receiving end of the tray transfer line and transport the vacant trays to the tray transfer line.
